(19) Europäisches Patentamt

European Patent Office

Office européen des brevets

(11) **EP 1 308 692 A1**

(12) **EUROPEAN PATENT APPLICATION**

(43) Date of publication:
07.05.2003 Bulletin 2003/19

(51) Int Cl.7: **G01B 7/30**, G01D 5/14

(21) Application number: 02257558.3

(22) Date of filing: 31.10.2002

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI** | (72) Inventors:<br>• **Hiramatsu, Yasuhiro**<br>  **Kanagawa 214-0037 (JP)**<br>• **Okazaki, Hiroyuki**<br>  **Kanagawa 229-0026 (JP)** |
| (30) Priority: **31.10.2001 JP 2001333818** | (74) Representative: **Warren, Keith Stanley et al**<br>**BARON & WARREN** |
| (71) Applicant: **Tyco Electronics AMP K.K.**<br>**Kawasaki, Kanagawa 213-8535 (JP)** | **19 South End**<br>**Kensington**<br>**London W8 5BU (GB)** |

(54) **Rotation angle sensor**

(57)    An angle sensor (1) combining a permanent magnet (36) and a Hall element (50). The permanent magnet is mounted on a rotor (14) and positioned at a distance r from the rotational center of the rotor in its reference position, and an axis which connects the N and S poles of the permanent magnet passes through the rotational center. A package (44) containing the Hall element is fixed to a cover (16) so that the Hall element is at a distance V from the rotational center while the Hall element is positioned on the axis of the permanent magnet (36). At this time, the package is oriented so that the magnetic flux detection direction of the Hall element is perpendicular to the axis of the permanent magnet. By slightly shifting the position of the Hall element from the rotational center, a high accuracy angle sensor is obtained.

# FIG.4

EP 1 308 692 A1

## Description

BACKGROUND OF THE INVENTION

Field of the Invention

The present invention relates to an angle sensor constructed by the combination of a permanent magnet and a Hall element.

Description of the Related Art

An angle sensor combining a permanent magnet and a Hall Effect element (magnetic converting element, hereinafter simply referred to as "Hall element") is disclosed in Japanese Unexamined Patent Publication No. 10 (1998)-132506. This sensor was developed to detect the throttle position of an internal combustion engine of an automobile. This sensor comprises a rotor portion formed as a rotational shaft; a permanent magnet semicircular in cross section arranged coaxially with the rotational shaft; a supporting body which does not rotate; and a hall element arranged on the supporting body positioned on the central axis of the rotational shaft. When the permanent magnet rotates relative to the Hall element, the magnetic field direction with respect to the magneto sensitive surface of the Hall sensor changes, and an electrical signal corresponding to the angle of the change is output from the Hall element. The output electrical signal corresponds to the angular change of the permanent magnet, that is, the throttle position.

In addition, a throttle position sensor for detecting the throttle position of an internal combustion engine is disclosed in Japanese Unexamined Patent Publication No. 5 (1993)-26610. This sensor comprises a pair of permanent magnets arranged on an arc formed with a rotational shaft as its center; and a Hall element for detecting the throttle position arranged at the center between the two permanent magnets, supported by a fixed member. In addition, another permanent magnet is arranged at a collar portion of the rotating shaft; and another Hall element for detecting idle is arranged in the vicinity thereof at a position corresponding to that of the fixed member. This idle detecting Hall element is structured to be positioned on the boundary line between the pair of permanent magnets during an idle state.

In the aforementioned conventional technologies for detecting throttle position, when permanent magnets rotate in proportion to the throttle position, Hall elements convert a change in magnetic field to an output electrical signal corresponding to the throttle position, and an engine is electronically controlled based on this signal. The conventional arrangement of the Hall elements and the permanent magnets is such that the Hall elements are positioned at the rotational center of the permanent magnets. By this method, the detection accuracy can be made to be within a tolerance of 2%. However, further improvements in detection accuracy are desired, and the aforementioned angle sensors are limited in their ability to meet this demand. The reason for this is as follows. Within a certain angular range, the sensor angle and the output voltage of the Hall element becomes a sine curve, and not a linear function. Therefore, the correlation of the true value and the output value, the so-called linearity becomes poor. More specifically, within a range of $\pm 45°$ from its reference position, the correlation is comparatively linear, but when converted to linearity, deviations, that is, errors on the order of $\pm 100$mV occur. This error corresponds to approximately 2% of the output of the Hall element.

SUMMARY OF THE INVENTION

The present invention has been developed in view of the above points, and it is an object of the present invention to provide an angle sensor with high detection accuracy for a rotational angle.

The first angle sensor according to the present invention comprises:

a rotating body;
a permanent magnet mounted on the rotating body for detecting a rotational angle;
a fixed body;
a Hall element mounted on the fixed body for outputting an electrical signal corresponding to a magnetic flux density of the permanent magnet which rotates relative to the Hall element;

wherein
the permanent magnet is arranged at a predetermined distance from the rotational center of the rotating body so that the axis of the permanent magnet faces towards the rotational center;
the Hall element is arranged on the axis of the permanent magnet on the other side of the rotational sensor, at an offset distance shorter than the predetermined distance when the rotating body is at its reference position, so that the magnetic flux detection direction of the Hall element is perpendicular to the axis; and
the ratio of the predetermined distance of the permanent magnet and the offset distance of the Hall element, as well as the rotational angle of the rotating body is set to be the range in which the output electrical signal linearly transforms.

The second angle sensor according to the present invention comprises:

a rotating body;
a permanent magnet mounted on the rotating body for detecting a rotational angle;
a fixed body;
a Hall element mounted on the fixed body for outputting an electrical signal corresponding to a magnetic flux density of the permanent magnet which rotates relative to the Hall element;

wherein

the permanent magnet is arranged at a predetermined distance from the rotational center of the rotating body so that the axis of the permanent magnet faces towards the rotational center;

the Hall element is arranged on the axis of the permanent magnet on the other side of the rotational sensor, at an offset distance shorter than the predetermined distance when the rotating body is at its reference position, so that the magnetic flux detection direction of the Hall element is perpendicular to the axis; and

the ratio of the predetermined distance of the permanent magnet and the offset distance of the Hall element, as well as the rotational angle of the rotating body is set so that the output electrical signal is within a predetermined margin of error.

Here, the "axis of the permanent magnet" refers to an imaginary line that passes through the N and S poles as well as the center of the center of the magnet.

It is preferable that the ratio of the predetermined distance of the permanent magnet and the offset distance of said Hall element is within the range of 10: 0.5 to 10:3.5.

Further, it is preferable that the rotational angle of the rotating body is within the range of $\pm 90°$; and the ratio of the predetermined distance of the permanent magnet and the offset distance of the Hall element is within the range of 10:1.5 to 10:2.5.

In addition, it is preferable that the rotational angle of the rotating body is within the range of $\pm 45°$.

The first angle sensor according to the present invention has a permanent magnet arranged at a predetermined distance from the rotational center of a rotating body so that the axis of the permanent magnet faces the rotational center; and a Hall element arranged on the axis of the permanent magnet on the other side of the rotational sensor, at an offset distance shorter than the predetermined distance when the rotating body is at its reference position. At this time, the Hall element is arranged so that the magnetic flux detection direction thereof is perpendicular to the axis of the permanent magnet. The ratio of the predetermined distance of the permanent magnet and the offset distance of the Hall element, as well as the rotational angle of the rotating body is set to be the range in which the output electrical signal linearly transforms. Therefore, the following effects are obtained.

That is, by slightly shifting the position of the Hall element from the rotational center of the permanent magnet, an electrical signal basically having a high degree of linearity can be obtained from the Hall element within a desired angular range. Because this output from the Hall element is linear, correction thereof is easy, thereby enabling high detection accuracy for a rotational angle.

The second angle sensor according to the present invention has a permanent magnet arranged at a predetermined distance from the rotational center of a rotating body so that the axis of the permanent magnet faces the rotational center; and a Hall element arranged on the axis of the permanent magnet on the other side of the rotational sensor, at an offset distance shorter than the predetermined distance when the rotating body is at its reference position. At this time, the Hall element is arranged so that the magnetic flux detection direction thereof is perpendicular to the axis of the permanent magnet. The ratio of the predetermined distance of the permanent magnet and the offset distance of the Hall element, as well as the rotational angle of the rotating body is set so that the output electrical signal is within a predetermined margin of error. Therefore, even if the output electrical signal is not linear, because the amount of error is basically extremely small, it can be utilized as is, without correction, and high detection accuracy can be obtained.

In the case that the ratio of the predetermined distance of the permanent magnet and the offset distance of said Hall element is within the range of 10:0.5 to 10:3.5, the linearity of the output signal is extremely favorable. Therefore, the detection accuracy for the rotational angle can be further improved.

Further, in the case that the rotational angle of the rotating body is within the range of $\pm 90°$ and the ratio of the predetermined distance of the permanent magnet and the offset distance of the Hall element is within the range of 10:1.5 to 10:2.5, good linearity is exhibited through the range of $\pm 90°$. In addition, the amount of error is small, so that the detection accuracy for the rotational angle can be made to be extremely high. This may be applied to, for example, detecting the motion of an arm joint of an industrial robot, which has a wide range of motion.

In addition, in the case that the rotational angle of the rotating body is within the range of $\pm 45°$, good linearity is exhibited within this range. Therefore, the detection accuracy for the rotational angle can be made to be extremely high. This may be applied for detecting the throttle position of an internal combustion engine, for which a rotational range of $\pm 45°$ is sufficient.

BRIEF DESCRIPTION OF THE DRAWINGS

Figure 1 is an exploded perspective view of the sensor according to the present invention.
Figure 2 is a vertical sectional view of the sensor taken along the line 2-2 in Figure 1.
Figure 3 is a horizontal sectional view of the sensor taken along the line 3-3 in Figure 1.
Figure 4 is a schematic view showing the positional relationship between the permanent magnet mounted on the rotor and the package having the Hall element therein

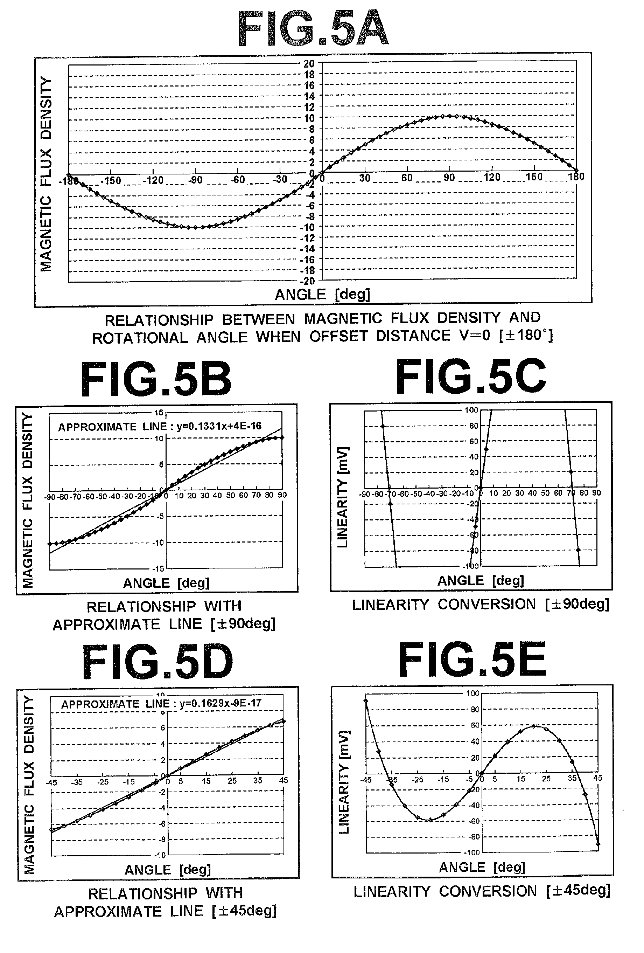

Figure 5 shows graphs of data of a conventional case, in which the offset distance V is 0; wherein Figure 5A shows the relationship between the magnetic flux density and the rotational angle when the rotational angle of the permanent magnet 36 is within the range of ±180°; Figure 5B shows the relationship between the magnetic flux density and the approximate line when the rotational angle is within the range of ±90°; Figure 5C shows the linearity in the case of Figure 5B; Figure 5D shows the relationship between the magnetic flux density and the approximate line when the rotational angle is within the range of ±45°; and Figure 5E shows the linearity in the case of Figure 5D.

Figure 6 shows graphs in the case that the ratio of the offset distance V to the rotating radius r of the permanent magnet is 0.5:10; wherein the data of Figures 6A, 6B, 6C, 6D, and 6E correspond to the data of Figures 5A, 5B, 5C, 5D, and 5E, respectively.

Figure 7 shows graphs in the case that the ratio of the offset distance V to the rotating radius r of the permanent magnet is 1:10; wherein the data of Figures 7A, 7B, 7C, 7D, and 7E correspond to the data of Figures 5A, 5B, 5C, 5D, and 5E, respectively.

Figure 8 shows graphs in the case that the ratio of the offset distance V to the rotating radius r of the permanent magnet is 1.5:10; wherein the data of Figures 8A, 8B, 8C, 8D, and 8E correspond to the data of Figures 5A, 5B, 5C, 5D, and 5E, respectively.

Figure 9 shows graphs in the case that the ratio of the offset distance V to the rotating radius r of the permanent magnet is 2:10; wherein the data of Figures 9A, 9B, 9C, 9D, and 9E correspond to the data of Figures 5A, 5B, 5C, 5D, and 5E, respectively.

Figure 10 shows graphs in the case that the ratio of the offset distance V to the rotating radius r of the permanent magnet is 2.5:10; wherein the data of Figures 10A, 10B, 10C, 10D, and 10E correspond to the data of Figures 5A, 5B, 5C, 5D, and 5E, respectively.

Figure 11 shows graphs in the case that the ratio of the offset distance V to the rotating radius r of the permanent magnet is 3:10; wherein the data of Figures 11A, 11B, 11C, 11D, and 11E correspond to the data of Figures 5A, 5B, 5C, 5D, and 5E, respectively.

Figure 12 shows graphs in the case that the ratio of the offset distance V to the rotating radius r of the permanent magnet is 3.5:10; wherein the data of Figures 12A, 12B, 12C, 12D, and 12E correspond to the data of Figures 5A, 5B, 5C, 5D, and 5E, respectively.

## DESCRIPTION OF THE PREFERRED EMBODIMENTS

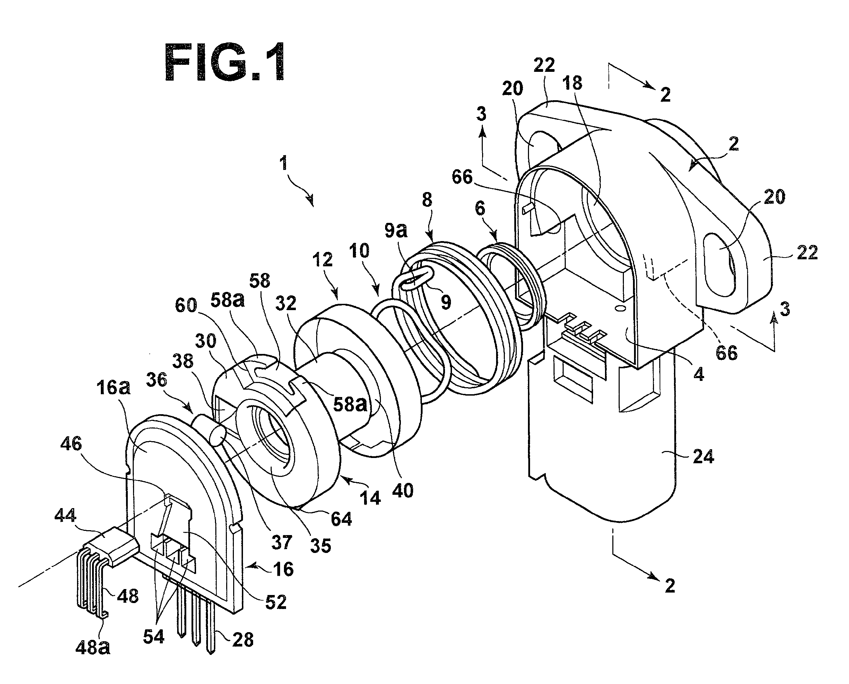

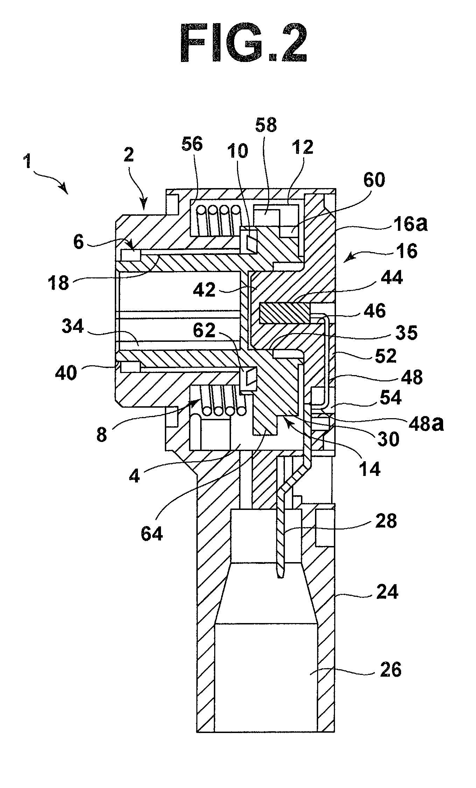

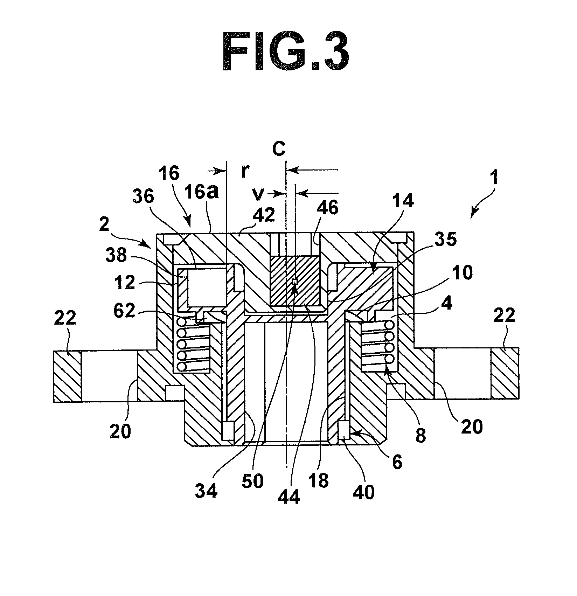

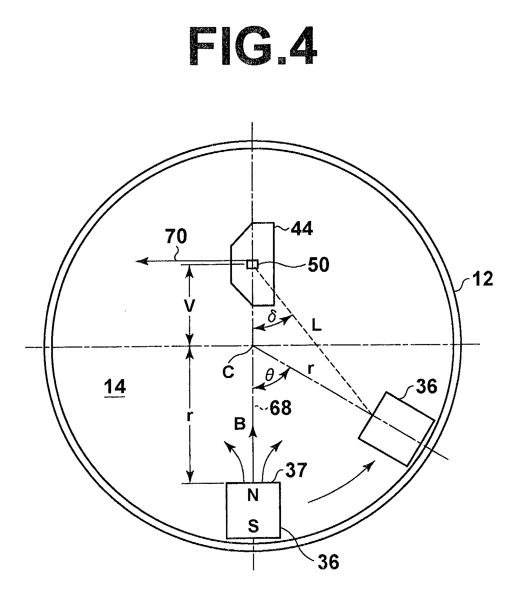

Hereinafter, a preferred embodiment of the angle sensor (hereinafter simply referred to as sensor) according to the present invention will be described with reference to the attached figures. Figure 1 is an exploded perspective view of the sensor according to the present invention. Figure 2 is a vertical sectional view of the sensor taken along the line 2-2 in Figure 1. Figure 3 is a horizontal sectional view of the sensor taken along the line 3-3 in Figure 1. Hereinafter, a description will be given with reference to Figure 1 through Figure 3. The sensor 1 comprises an insulative housing 2 having a space 4 which opens to the side thereof; a seal ring 6, a coil spring 8, a wave washer 10, an annular yoke 12, and a rotor (rotating body) 14 sequentially arranged within the space 4; a cover (fixed body) 16 to seal the space 4 after the above components have been mounted therein; and a package 44 containing a Hall element 50 (Figure 3, Figure 4) mounted on the cover 16. Note that the package 44 generally includes an A/D converter, a digital signal processor (DSP), a D/A converter, and an analog amplifier. This type of package is commonly referred to as a Hall IC.

The upper portion of the space 4 is formed in an arcuate shape, and has an aperture through which the rotor 14 is inserted. In addition, a pair of flanges 22 each having mounting holes 20 is provided at the upper portion of the housing 2, to enable mounting at a predetermined position of an engine (not shown). Further, a connector portion 24 for electrically connecting the output of the sensor 1 to an electronic control apparatus (not shown) is integrally formed at the lower portion of the housing 2. As most clearly shown in Figure 2, an engagement recess 26 for engaging another connector (not shown) is formed at the connector portion 24. Three terminals 28 (Figure 2) that extend to within the space 4 are aligned in the engagement recess 26.

Next, each of the components that are mounted within the space 4 will be described in further detail. The rotor 14, formed of a resin, comprises a discoid collar 30, and a cylindrical trunk portion 32 extending perpendicularly with respect to the collar 30, from the center thereof. The collar 30 and the trunk portion 32 have formed extending through the interiors thereof mounting holes 34 and 35, respectively. A shaft (not shown) linked to a throttle valve (not shown) of the engine is inserted through the mounting hole 34 and fixed therein. A housing recess 38 for housing a cylindrical permanent magnet 36 is formed in the vicinity of the outer peripheral edge portion of the collar 30. An annular step portion 40 for fitting the seal ring 6 thereon is formed at the vicinity of the tip of the trunk portion 32. In addition, a cutout 58 is formed at a portion of the outer periphery of the collar 30. Protrusions 58a are formed that project inward from both edges of the cutout 58. A curved recess 60 is formed on the outer surface of the collar 30 adjacent to the cutout 58.

A hook 9 at the end of the coil spring 8 is hooked on the protrusion 58a, to bias the rotor 14 in a predetermined direction, that is, in the direction that closes the throttle valve. The curved recess 60 is provided to house a tip 9a of the hook 9 so as to prevent the tip 9a from interfering with the other components. In addition, a protrusion 64 for defining the rotational range of the rotor 14 is integrally formed at the lower edge of the collar 30. This protrusion 64 engages a pair of downwardly facing stop surfaces 66 formed within the space 4 of the housing 2 to define the rotational range of the rotor. With regard to the present embodiment, when the rotor 14 is in its reference position, the protrusion 64 is positioned at the bottom thereof, and the rotor is rotatable within a predetermined range until the protrusion 64 engages one of the stop surfaces 66.

The cover 16 is a plate having an arcuate upper edge, shaped to match the opening of the space 4. A cylindrical protrusion 42 (Figure 2, Figure 3) to be inserted into the mounting hole 35 of the rotor 14 is formed on the interior side of the cover 16, at the approximate center thereof. An insertion opening 46, in which the package 44 is inserted, is formed in the protrusion 42. The package 44, which is substantially a rectangular parallelepiped, after both edges of its upper surface are beveled, is inserted into the insertion opening 46, which is substantially rectangular in cross section, then fixed therein. At this time, it is important, as most clearly shown in Figure 3 and Figure 4, that the package is biased away from the rotational center C (Figure 4) of the rotor 14. Accordingly, the Hall element 50, positioned at the center of the package 44 in its axial direction, is also biased away from the rotational center C. The function of this construction will be described later.

Three contacts 48 linked to the Hall element extend downward from the package 44. A groove 52 that communicates with the insertion opening 46 and extends downward is formed on the outer surface 16a of the cover 16. Three cavities 54, corresponding to the aforementioned terminals 28, are formed from the lower edge of the groove 52. The contacts 48 are arranged in this groove 52, while the tips 48a thereof which bend towards the terminals 28 are arranged in the cavities 54. The contacts 48 and the terminals 28 are soldered together, and electrical connections are established therebetween.

When the rotor is positioned within the space 4, the space between the rotor 14 and the aperture 18 of the housing 2 is sealed by the seal ring 6, therefore preventing the entry of water, oil, and the like into the housing 2, as shown in Figure 2 and Figure 3. The coil spring 8 is positioned within an annular groove 56 of the housing 2. The wave washer 10 is positioned within an annular groove 62 formed in the collar 30 of the rotor 14, between the housing 2 and the rotor 14. By this construction, the washer 10 always urges the rotor 14 towards the cover 16, and maintains the positional relationship between the Hall element of the package 44 and the permanent magnet 36 held by the rotor 14. More specifically, the center of the permanent magnet 36 and the Hall element 50 are positioned to be coplanar, as shown in Figure 3. They may be slightly shifted from the coplanar relationship; however, the detection sensitivity is optimal when they are coplanar. The aforementioned yoke 12 is metallic, is fitted on the outside of the rotor 14 to construct a two dimensionally sealed magnetic circuit, thereby eliminating the influence of exterior magnetism to the Hall element.

Next, the operation of the sensor according to the present embodiment will be described with reference to Figure 4. Figure 4 is a schematic view showing the positional relationship between the permanent magnet 36 mounted on the rotor 14 and the package 44 having the Hall element 50 therein, in a state in which the rotor is in its reference position. The permanent magnet 36 is mounted on the rotor 14 so that it is positioned directly under the rotational center c of the rotor 14, with a distance r between a terminal face 37 of the permanent magnet 36 and the rotational center C, and so that an axis 68 that connects the N pole and the S pole of the magnet 36 faces the rotational center C. Meanwhile, the package is fixed to the cover 16 so that the Hall element is separated from the rotational center C by a distance V, while the Hall element 50 is positioned along the axis 68. At this time, the direction of the package 44 is such that the magnetic flux detection direction 70 of the Hall element is perpendicular to the axis 68.

Next, in the case that the rotor 14 rotates θ degrees counterclockwise, the following equations are established. That is, the output of the Hall element $\propto B\sin\delta$; and

the output of the Hall element $\propto 1/L^2$.

Accordingly, the output of the Hall element $\propto B\sin\delta/L^2$

$$= Br/L\sin\theta/L^2$$

$$= Br/L^3\sin\theta$$

wherein L is the distance between the permanent magnet 36 and the Hall element; δ is the angle formed by the permanent magnet 36 and the axis 68; and B is the magnetic flux density of the permanent magnet 36. A sine curve output which is basically proportional to the magnetic flux density B can be obtained from the Hall element, by these equations.

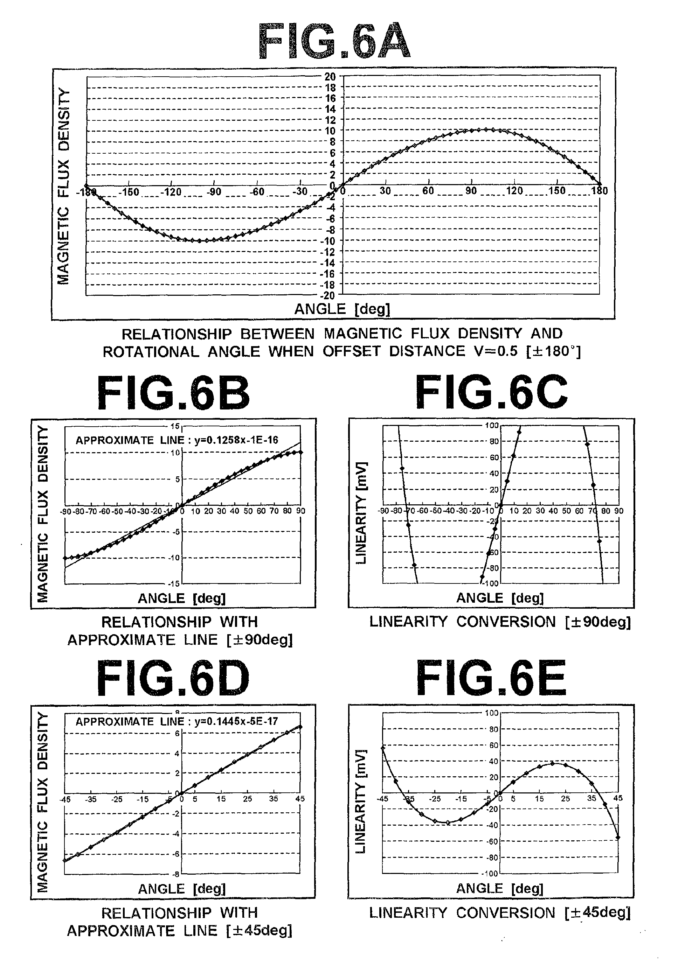

The results derived by these equations for the change in magnetic flux density as well as the linearity (shift from approximate lines) as the offset distance V of the Hall element is changed, are shown in Figure 5 through Figure 12. Figure 5 shows graphs of data of a conventional case, in which the offset distance V is 0, that is, when the Hall element 50 is at the rotational center C. Figure 5A shows the relationship between the magnetic flux density and the rotational angle when the rotational angle of the permanent magnet 36 is within the range of ±180°; Figure 5B shows the relationship between the magnetic flux density and the approximate line when the rotational angle is within the range of ±90°; Figure 5C shows the linearity in the case of Figure 5B; Figure 5D shows the relationship between the magnetic flux density and the approximate line when the rotational angle is within the range of ±45°; and Figure 5E shows the linearity in the case of Figure 5D. Figure 6 through Figure 12 indicate graphs of data of the various embodiments of the present invention.

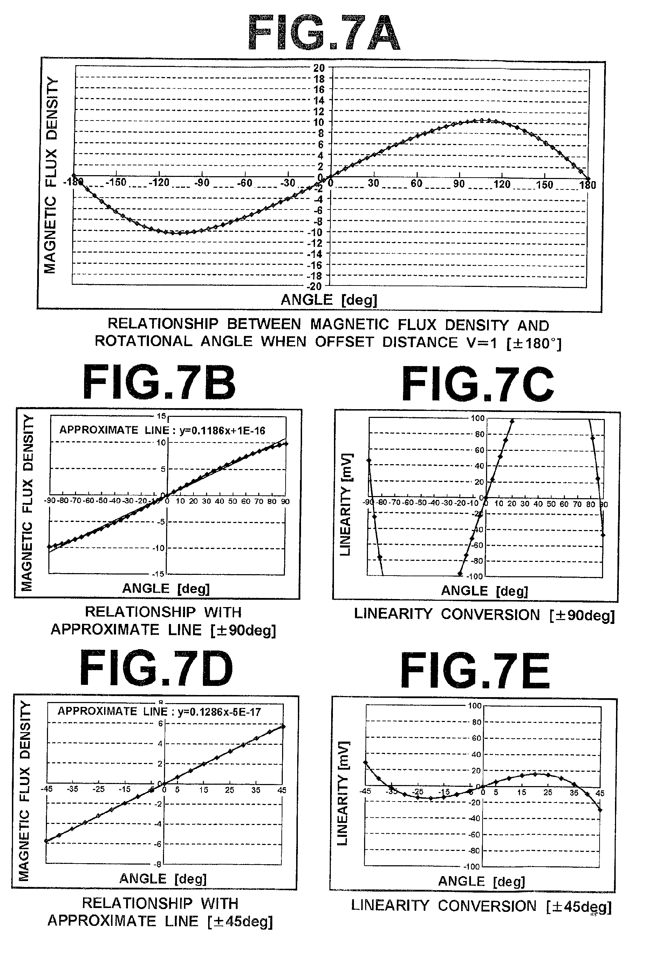

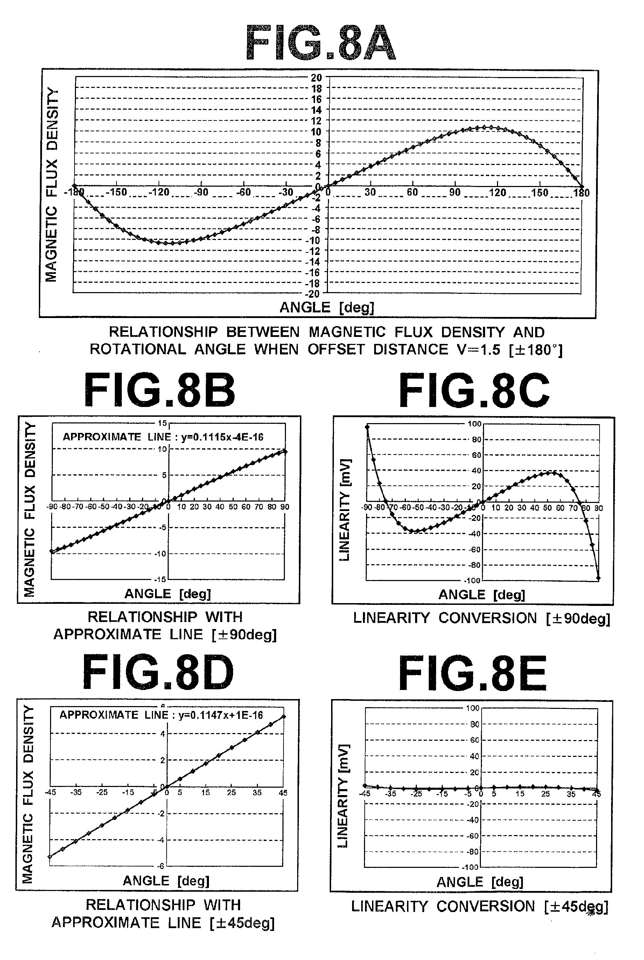

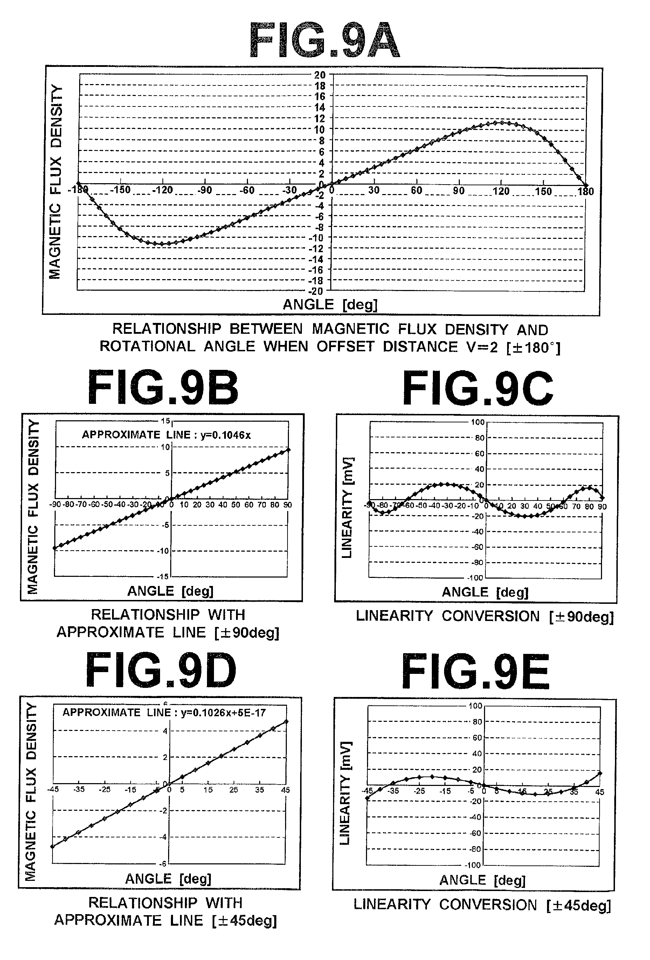

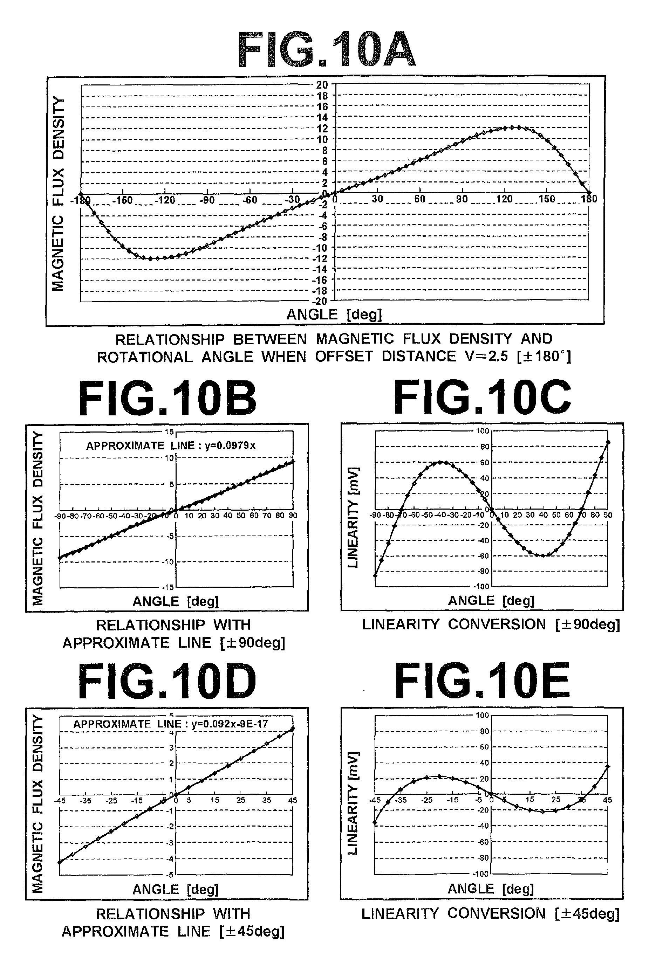

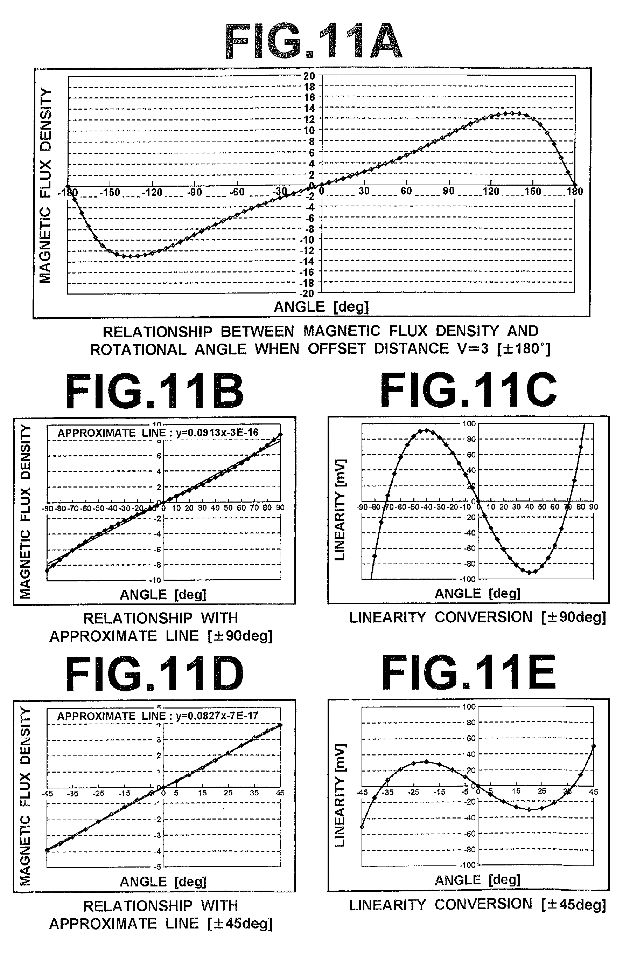

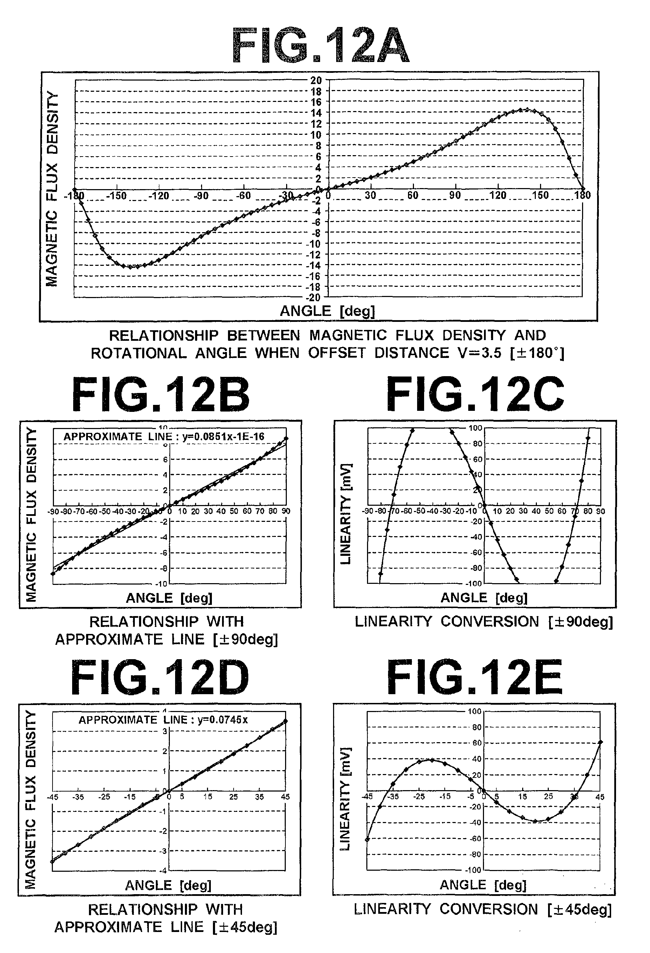

Figure 6 shows graphs in the case that the ratio of the offset distance V to the rotating radius r of the permanent magnet is 0.5:10. Figures 6A, 6B, 6C, 6D, and 6E correspond to data of Figures 5A, 5B, 5C, 5D, and 5E, respectively. Figure 7 shows graphs in the case that the ratio of the offset distance V to the rotating radius r of the permanent magnet is 1:10. Figures 7A, 7B, 7C, 7D, and 7E correspond to data of Figures 5A, 5B, 5C, 5D, and 5E, respectively. Figure 8 shows graphs in the case that the ratio of the offset distance V to the rotating radius r of the permanent magnet is 1.5:10. Figures 8A, 8B, 8C, 8D, and 8E correspond to data of Figures 5A, 5B, 5C, 5D, and 5E, respectively. Figure 9 shows graphs in the case that the ratio of the offset distance V to the rotating radius r of the permanent magnet is 2:10. Figures 9A, 9B, 9C, 9D, and 9E correspond to data of Figures 5A, 5B, 5C, 5D, and 5E, respectively. Figure 10 shows graphs in the case that the ratio of the offset distance V to the rotating radius r of the permanent magnet is 2.5:10. Figures 10A, 10B, 10C, 10D, and 10E correspond to data of Figures 5A, 5B, 5C, 5D, and 5E, respectively. Figure 11 shows graphs in the case that the ratio of the offset distance V to the rotating radius r of the permanent magnet is 3:10. Figures 11A, 11B, 11C, 11D, and 11E correspond to data of Figures 5A, 5B, 5C, 5D, and 5E, respectively. Figure 12 shows graphs in the case that the ratio of the offset distance V to the rotating radius r of the permanent magnet is 3.5:10. Figures 12A, 12B, 12C, 12D, and 12E correspond to data of Figures 5A, 5B, 5C, 5D, and 5E, respectively. Note that hereinafter, the offset distances V will be simply referred to as 0.5, 1, 1.5, 2, 2.5. In addition, when the permanent magnet 36 rotates in the reverse clockwise direction, the values in the graph become positive (+), and when the permanent magnet 36 rotates in a clockwise direction, the values in the graph become negative (-).

Hereinafter, the data of these graphs will be described in detail. Figures 5A, 6A, 7A, 8A, 9A, 10A, 11A, and 12A indicate the change in the magnetic flux density detected by the Hall element 50 as the permanent magnet 36 moves through a range of ±180°, and are graphs approximating a sine curve. The most linear changes occur when the rotational angle θ is in the vicinity of 0°, that is, in the vicinity of the reference position. As the rotational angle θ increases, the magnetic flux density B increases, until the magnetic flux density B passes its peak. Beyond this point, even if the rotational angle θ increases, the graph changes in a curvilinear manner and the magnetic flux density decreases. The closer that the curve which contains 0° is to a straight line, and the larger the rotational angle θ until the linear state is maintained, the sensor is accurate, and superior for use in a wide range of applications. In the case of the conventional sensor shown in Figure 5, at portions other than the vicinity of 0°, the output is a gradual curve that deviates from a linear change. With regard to the cases in which the offset distances V are 0.5, 1, 1.5, 2, 2.5, 3, and 3.5, shown in Figures 6, 7, 8, 9, 10, 11, and 12, respectively, it can be seen that favorable linear changes occur. By setting lines closest to these curves as approximate lines, and by judging to what degree the curves deviate from the approximate lines, the offset distance V appropriate for the sensor 1, as well as the rotational angle θ, can be determined.

An opening/closing mechanism of a throttle valve (not shown) to which the present embodiment is applied is generally used within the range of ±45°. Other applications, for example, a robot joint or the like, are used within the range of ±90°. If the changes in magnetic flux density are observed within these ranges, the following results are obtained.

First, the conventional case in which the offset distance V is 0 will be described with reference to Figure 5B and Figure 5D. Figure 5B and Figure 5D show the degree of deviation, that is, error, of the (partial) sine curve representing the magnetic flux density B from a line (approximate line) that approximates the curve. Note that the lines indicated in Figure 5B and Figure 5D are approximate lines within the angular ranges shown in the figures, so they are not necessarily the same line. Within the range of ±90° shown in Figure 5B, the error is comparatively large, and within the range of ±45° shown in Figure 5D, the error is comparatively small. The linearity graphs of Figure 5C and Figure 5E, corresponding to Figure 5B and Figure 5D respectively, express these errors as numerical values. These graphs show to what degree error in the magnetic flux density is expressed as output error, and it can be seen that in the range of ±90°, the output error is immeasurably large. This indicates that the error of the electrical signal output by the Hall element 50, corresponding to the amount of magnetic flux density B, is extremely large, and difficult to correct for. Accordingly, such a sensor cannot be utilized as an accurate sensor 1 within the range of ±90°. In addition, within the range of ±45°, maximum errors of approximately ±90mV are observed when the rotational angle is ±45°. A deviation of ±90mV corresponds to ±1.8% of the output of a Hall element 50, when it is considered that the output of the Hall element 50 is generally on the order of 5V. Accordingly, in the case that the offset distance is 0, and the sensor is utilized in the range of ±45°, the sensor has a maximum error of ±1.8%.

Next, the case of the present invention in which the offset distance V is 0.5 will be described with reference to Figure 6B and Figure 6D, as well as Figure 6C and Figure 6E, corresponding thereto. In the range of $\pm90°$, the degree of deviation from the approximate line is immeasurably large as shown in Figure 6C. Therefore, the sensor cannot be utilized, similar to the conventional case. In the range of $\pm45°$, maximum errors of $\pm60mV$ are observed when the rotational angle is $\pm45°$. A deviation of $\pm60mV$ corresponds to $\pm1.2\%$ of the output of a Hall element 50, when it is considered that the output of the Hall element 50 is generally on the order of 5V. Accordingly, it can be understood that in the range of $\pm45°$, less error occurs than in the conventional case shown in Figure 5, and detection is performed with higher accuracy. Accordingly, in the case that the offset distance V is 0.5, the sensor can be utilized as a superior sensor in the range of $\pm45°$.

Next, the case in which the offset distance V is 1 will be described with reference to Figure 7B and Figure 7D, as well as Figure 7C and Figure 7E, corresponding thereto. In the range of $\pm90°$, the degree of deviation is immeasurably large. Therefore, the sensor cannot be utilized, similar to the conventional case. In the range of $\pm45°$, errors of approximately $\pm30mV$ are observed when the rotational angle is $\pm45°$. A deviation of $\pm30mV$ corresponds to $\pm0.6\%$ of the output of a Hall element 50, when it is considered that the output of the Hall element 50 is generally on the order of 5V. In addition, excluding the vicinity of $\pm45°$, the graph exhibits favorable linearity, with errors less than $\pm20mV$ over substantially the entire range. This favorable linearity facilitates output correction, by which the error can be made even smaller. Accordingly, in the range of $\pm45°$, the sensor 1 is capable of detection of a higher accuracy than the conventional case shown in Figure 5, as well as the case in which the offset distance V is 0.5. Accordingly, in the case that the offset distance V is 1, the sensor can be utilized as a superior sensor in the range of $\pm45°$.

Next, the case in which the offset distance V is 1.5 will be described with reference to Figure 8B and Figure 8D, as well as Figure 8C and Figure 8E, corresponding thereto. In the range of $\pm90°$, deviations of approximately $\pm90mV$ are observed at $\pm45°$. This deviation translates to errors of approximately 1.8%. However, this value indicates a significant improvement over the aforementioned cases in which the offset distance V are 0, 0.5, and 1. Although it is still somewhat large as a numerical value, the improvement in detection accuracy with regard to the range of $\pm90°$ can be said to be significant. In the range of $\pm45°$, the curve approximately overlaps the line as shown in Figure 8D, and it can be understood that there is almost no error. This indicates that the output of the Hall element 50 can be utilized as is, without correction. Accordingly, in the case that the offset distance V is 1.5, the sensor can be utilized as a superior sensor in the range of $\pm90°$ as well as in the range of $\pm45°$. The sensor is particularly superior with regard to the range of $\pm45°$.

Next, the case in which the offset distance V is 2 will be described with reference to Figure 9B and Figure 9D, as well as Figure 9C and Figure 9E, corresponding thereto. In the range of $\pm90°$, the curve approximately overlaps the approximate line, and the degrees of deviation are within the range of $\pm20mV$. This deviation translates to errors of approximately 0.4%, which can be said to be an extremely small amount of error. In the range of $\pm45°$ as well, the curve almost overlaps the line, and the degrees of deviation are within the range of $\pm10mV$. This deviation translates to errors of approximately 0.2%, and is extremely small. Accordingly, in the case that the offset distance V is 2, the sensor can be utilized as a superior sensor in the range of $\pm90°$ as well as in the range of $\pm45°$.

Next, the case in which the offset distance V is 2.5 will be described with reference to Figure 10B and Figure 10D, as well as Figure 10C and Figure 10E, corresponding thereto. In the range of $\pm90°$, the curve substantially overlaps the approximate line, and the degrees of deviation are within the range of approximately $\pm90mV$. This deviation translates to errors of approximately 1.8%. However, as in the case in which the offset distance V is 1.5 (Figure 8), this value indicates a significant improvement over the conventional case (Figure 5), and sufficiently effective detection is possible. Similarly, in the range of $\pm45°$, the curve almost overlaps the approximate line, and the errors are within a range of approximately $\pm30mV$. This translates to errors of approximately 0.6%, and is extremely small. Accordingly, in the case that the offset distance V is 2.5, the sensor can be utilized as a superior sensor in the range of $\pm90°$ as well as in the range of $\pm45°$.

Next, the case in which the offset distance V is 3 will be described with reference to Figure 11B and Figure 11D, as well as Figure 11C and Figure 11E, corresponding thereto. In the range of $\pm90°$, the curve is somewhat shifted from the approximate line. At the $\pm90°$ positions, the degrees of deviation are immeasurably large. Accordingly, the sensor can not be utilized within this range. In the range of $\pm45°$, the curve almost overlaps the line, and errors are within the range of $\pm50mV$. This translates to errors of approximately 1%, and is sufficient for utilization of the sensor. Accordingly, in the case that the offset distance V is 3, the sensor can be utilized as a superior sensor in the range of $\pm45°$.

Next, the case in which the offset distance V is 3.5 will be described with reference to Figure 12B and Figure 12D, as well as Figure 12C and Figure 12E, corresponding thereto. In the range of $\pm90°$, the curve is somewhat shifted from the approximate line. At the $\pm90°$ positions as well as the $\pm40°$ positions, the degrees of deviation are immeasurably large. Accordingly, the sensor can not be utilized within this range. In the range of $\pm45°$, the curve almost overlaps the line, and errors are within the range of $\pm60mV$. This translates to errors of approximately 1.2%, and is sufficient for utilization of the sensor. Accordingly, in the case that the offset distance V is 3.5, the sensor can be utilized as a superior sensor in the range of ±45°.

From the above, it can be understood that in the range of ±90°, detection of the rotational angle at a higher accuracy than the conventional case is possible when the offset distance V is within the range of 1.5 to 2.5. Among these offset distances, the best results are obtained when the offset distance V is 2 (Figure 9C) . In addition, it can be understood that in the range of ±45°, detection of the rotational angle at a higher accuracy than the conventional case is possible when the offset distance V is within the range of 0.5 to 3.5. Among these offset distances, the best results are obtained when the offset distance V is 1.5 (Figure 8E). Accordingly, sensors having offset distances V within the range of 0.5 to 3.5 can be employed. The detected output electrical signal can be further improved in detection accuracy by correction with a correction circuit. In addition, for offset distances V in between the above described offset distances V, it is assumed that intermediate data approximating the data obtained for the offset distances V on either side thereof are obtained. In this manner, by slightly shifting the position of the Hall element 50 from the rotational center C, a high accuracy sensor 1 is obtained. Therefore, the sensor can be manufactured with few parts, and at low cost.

The present invention has been described in detail above. However, the present invention is not to be limited by the embodiments described above. Needless to say, various modifications and changes are possible. For example, although it is necessary that the axis of the permanent magnet pass through the rotational center C, either the N pole or the S pole may be on the rotational center side. If the S pole is on the interior side as opposed to on the exterior side as in the above described embodiments, the only change will be that the positive and negative output of the Hall element 50 will be reversed. This can be easily converted by a correction circuit, and poses no practical problems.

**Claims**

1. An angle sensor comprising:

   a rotating body;
   a permanent magnet mounted on said rotating body for detecting a rotational angle;
   a fixed body;
   a Hall element mounted on said fixed body for outputting an electrical signal corresponding to a magnetic flux density of said permanent magnet which rotates relative to said Hall element; wherein
   said permanent magnet is arranged at a predetermined distance from the rotational center of said rotating body so that the axis of said permanent magnet faces towards said rotational center;
   said Hall element is arranged on said axis of said permanent magnet on the other side of said rotational sensor, at an offset distance shorter than said predetermined distance when said rotating body is at its reference position, so that the magnetic flux detection direction of said Hall element is perpendicular to said axis; and
   the ratio of said predetermined distance of said permanent magnet and said offset distance of said Hall element, as well as the rotational angle of said rotating body is set to be the range in which said output electrical signal linearly transforms.

2. An angle sensor comprising:

   a rotating body;
   a permanent magnet mounted on said rotating body for detecting a rotational angle;
   a fixed body;
   a Hall element mounted on said fixed body for outputting an electrical signal corresponding to a magnetic flux density of said permanent magnet which rotates relative to said Hall element; wherein
   said permanent magnet is arranged at a predetermined distance from the rotational center of said rotating body so that the axis of said permanent magnet faces towards said rotational center;
   said Hall element is arranged on said axis of said permanent magnet on the other side of said rotational sensor, at an offset distance shorter than said predetermined distance when said rotating body is at its reference position, so that the magnetic flux detection direction of said Hall element is perpendicular to said axis; and
   the ratio of said predetermined distance of said permanent magnet and said offset distance of said Hall element, as well as the rotational angle of said rotating body is set so that said output electrical signal is within a predetermined margin of error.

3. An angle sensor as defined in either Claim 1 or Claim 2, wherein:

   said ratio of said predetermined distance of said permanent magnet and said offset distance of said Hall element is within the range of 10:0.5 to 10:3.5.

4. An angle sensor as defined in Claim 3 wherein:

   said rotational angle of said rotating body is within the range of ±90°; and

said ratio of said predetermined distance of said permanent magnet and said offset distance of said Hall element is within the range of 10:1.5 to 10:2.5.

5. An angle sensor as defined in Claim 3 wherein:

said rotational angle of said rotating body is within the range of ±45°.

# FIG.1

EP 1 308 692 A1

# FIG.2

# FIG.3

# FIG.4

# FIG.5A

RELATIONSHIP BETWEEN MAGNETIC FLUX DENSITY AND
ROTATIONAL ANGLE WHEN OFFSET DISTANCE V=0 [±180°]

# FIG.5B

APPROXIMATE LINE : y=0.1331x+4E-16

RELATIONSHIP WITH
APPROXIMATE LINE [±90deg]

# FIG.5C

LINEARITY CONVERSION [±90deg]

# FIG.5D

APPROXIMATE LINE : y=0.1629x-9E-17

RELATIONSHIP WITH
APPROXIMATE LINE [±45deg]

# FIG.5E

LINEARITY CONVERSION [±45deg]

14

# FIG.6A

RELATIONSHIP BETWEEN MAGNETIC FLUX DENSITY AND
ROTATIONAL ANGLE WHEN OFFSET DISTANCE V=0.5 [±180°]

# FIG.6B

APPROXIMATE LINE : y=0.1258x-1E-16

RELATIONSHIP WITH
APPROXIMATE LINE [±90deg]

# FIG.6C

LINEARITY CONVERSION [±90deg]

# FIG.6D

APPROXIMATE LINE : y=0.1445x-5E-17

RELATIONSHIP WITH
APPROXIMATE LINE [±45deg]

# FIG.6E

LINEARITY CONVERSION [±45deg]

15

# FIG.7A

RELATIONSHIP BETWEEN MAGNETIC FLUX DENSITY AND
ROTATIONAL ANGLE WHEN OFFSET DISTANCE V=1 [±180°]

# FIG.7B

APPROXIMATE LINE : y=0.1186x+1E-16

RELATIONSHIP WITH
APPROXIMATE LINE [±90deg]

# FIG.7C

LINEARITY CONVERSION [±90deg]

# FIG.7D

APPROXIMATE LINE : y=0.1286x-5E-17

RELATIONSHIP WITH
APPROXIMATE LINE [±45deg]

# FIG.7E

LINEARITY CONVERSION [±45deg]

# FIG.8A

RELATIONSHIP BETWEEN MAGNETIC FLUX DENSITY AND
ROTATIONAL ANGLE WHEN OFFSET DISTANCE V=1.5 [±180°]

# FIG.8B

APPROXIMATE LINE : y=0.1115x-4E-16

RELATIONSHIP WITH
APPROXIMATE LINE [±90deg]

# FIG.8C

LINEARITY CONVERSION [±90deg]

# FIG.8D

APPROXIMATE LINE : y=0.1147x+1E-16

RELATIONSHIP WITH
APPROXIMATE LINE [±45deg]

# FIG.8E

LINEARITY CONVERSION [±45deg]

17

# FIG.9A

RELATIONSHIP BETWEEN MAGNETIC FLUX DENSITY AND
ROTATIONAL ANGLE WHEN OFFSET DISTANCE V=2 [±180°]

# FIG.9B

APPROXIMATE LINE : y=0.1046x

RELATIONSHIP WITH
APPROXIMATE LINE [±90deg]

# FIG.9C

LINEARITY CONVERSION [±90deg]

# FIG.9D

APPROXIMATE LINE : y=0.1026x+5E-17

RELATIONSHIP WITH
APPROXIMATE LINE [±45deg]

# FIG.9E

LINEARITY CONVERSION [±45deg]

18

# FIG.10A

RELATIONSHIP BETWEEN MAGNETIC FLUX DENSITY AND
ROTATIONAL ANGLE WHEN OFFSET DISTANCE V=2.5 [±180°]

# FIG.10B

APPROXIMATE LINE : y=0.0979x

RELATIONSHIP WITH
APPROXIMATE LINE [±90deg]

# FIG.10C

LINEARITY CONVERSION [±90deg]

# FIG.10D

APPROXIMATE LINE : y=0.092x-9E-17

RELATIONSHIP WITH
APPROXIMATE LINE [±45deg]

# FIG.10E

LINEARITY CONVERSION [±45deg]

# FIG.11A

RELATIONSHIP BETWEEN MAGNETIC FLUX DENSITY AND
ROTATIONAL ANGLE WHEN OFFSET DISTANCE V=3 [±180°]

# FIG.11B

APPROXIMATE LINE : y=0.0913x-3E-16

RELATIONSHIP WITH
APPROXIMATE LINE [±90deg]

# FIG.11C

LINEARITY CONVERSION [±90deg]

# FIG.11D

APPROXIMATE LINE : y=0.0827x-7E-17

RELATIONSHIP WITH
APPROXIMATE LINE [±45deg]

# FIG.11E

LINEARITY CONVERSION [±45deg]

20

# FIG.12A

RELATIONSHIP BETWEEN MAGNETIC FLUX DENSITY AND
ROTATIONAL ANGLE WHEN OFFSET DISTANCE V=3.5 [±180°]

# FIG.12B

APPROXIMATE LINE : y=0.0851x-1E-16

RELATIONSHIP WITH
APPROXIMATE LINE [±90deg]

# FIG.12C

LINEARITY CONVERSION [±90deg]

# FIG.12D

APPROXIMATE LINE : y=0.0745x

RELATIONSHIP WITH
APPROXIMATE LINE [±45deg]

# FIG.12E

LINEARITY CONVERSION [±45deg]

21

**European Patent Office**

## EUROPEAN SEARCH REPORT

Application Number

EP 02 25 7558

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 100 08 535 A (BOSCH GMBH ROBERT) 2 November 2000 (2000-11-02) * column 2, line 29 - column 3, line 25 * * column 3, line 49 - column 4, line 43 * * figures 1-7 * | 1,2 | G01B7/30 G01D5/14 |
| A | | 3-5 | |
| X | EP 0 961 100 A (KEARNEY NATIONAL INC) 1 December 1999 (1999-12-01) * column 5, line 48 - line 52 * * column 6, line 25 - line 40 * * column 7, line 3 - line 16 * * column 9, line 1 - line 6 * * column 10, line 51 - column 11, line 13 * * figures 1A-1B,2A,4B,6A-6C * | 1,2 | |
| A | | 5 | |
| A | EP 1 069 400 A (DENSO CORP) 17 January 2001 (2001-01-17) * page 2, line 17 - line 33 * * page 4, line 3 - page 5, line 3 * * page 6, line 23 - line 25 * * figure 1 * | 1-5 | |

TECHNICAL FIELDS SEARCHED (Int.Cl.7)

G01B
G01D

The present search report has been drawn up for all claims

| Place of search | Date of completion of the search | Examiner |
|---|---|---|
| MUNICH | 20 January 2003 | Grand, J-Y |

EPO FORM 1503 03.82 (P04C01)

**ANNEX TO THE EUROPEAN SEARCH REPORT
ON EUROPEAN PATENT APPLICATION NO.**                    EP 02 25 7558

This annex lists the patent family members relating to the patent documents cited in  the above-mentioned European search report.
The members are as contained in the European Patent Office EDP file on
The European Patent Office is in no way  liable for these particulars which are merely  given for the purpose of information.

20-01-2003

| Patent document cited in search report | | Publication date | Patent family member(s) | | Publication date |
|---|---|---|---|---|---|
| DE 10008535 | A | 02-11-2000 | DE | 10008535 A1 | 02-11-2000 |
| | | | AU | 5670900 A | 02-11-2000 |
| | | | WO | 0063650 A1 | 26-10-2000 |
| | | | EP | 1173727 A1 | 23-01-2002 |
| EP 0961100 | A | 01-12-1999 | US | 6137288 A | 24-10-2000 |
| | | | AT | 229639 T | 15-12-2002 |
| | | | EP | 0961100 A2 | 01-12-1999 |
| | | | JP | 2000028314 A | 28-01-2000 |
| | | | US | 6472865 B1 | 29-10-2002 |
| | | | US | 6417664 B1 | 09-07-2002 |
| EP 1069400 | A | 17-01-2001 | JP | 2001091208 A | 06-04-2001 |
| | | | EP | 1069400 A1 | 17-01-2001 |

For more details about this annex : see Official Journal of the European Patent Office, No. 12/82